Europäisches Patentamt

European Patent Office

Office européen des brevets

(11) Publication number: **0 454 241 A2**

# EUROPEAN PATENT APPLICATION

(21) Application number: 91200942.0

(22) Date of filing: 19.04.91

(51) Int. Cl.⁵: **B29C 65/06**, B65B 51/22,
//B29L22:00

(30) Priority: 23.04.90 US 513381
23.04.90 US 513643

(43) Date of publication of application:
**30.10.91 Bulletin 91/44**

(84) Designated Contracting States:
**BE CH DE ES FR GB IT LI LU NL SE**

(71) Applicant: SHELL INTERNATIONALE
RESEARCH MAATSCHAPPIJ B.V.
Carel van Bylandtlaan 30
NL-2596 HR Den Haag(NL)

(72) Inventor: Kelley, John Wilbur
7206 Willow Bridge Circle
Houston, Texas 77095(US)
Inventor: Korcz, William Harold
3414 Rockyridge
Houston, Texas 77063(US)
Inventor: Smith, Roy Frank
5005 West Plum
Pearland, Texas 77581(US)

(74) Representative: Tuijn, Jan Warnaar et al
Shell Internationale Research Maatschappij
B.V., Patents, Licensing & Trade Marks
Division, P.O. Box 302
NL-2501 CH The Hague(NL)

(54) Resilient spinwelding of thermoplastic articles.

(57) An apparatus is disclosed for the resilient spinwelding of two (thermoplastic) body portions to one another. The incorporation of resilient members between the prior art "hard surfaced" spinweld apparatus and the body portions to be welded together significantly decreases the spinweld time, and in the case of container/lid systems used for food packaging, increases the burst pressure of the container/lid.

EP 0 454 241 A2

This invention relates to improvements in the spinwelding technique, in which two thermoplastic workpieces are held together and spun relative to one another so as to cause friction therebetween. The heat generated by the friction creates softened or melted plastic at the area of contact, which, on cooling, fuses the workpieces together at their contacting surfaces. Spinwelding is generally carried out by the pivot method or inertial method.

According to the pivot method, the workpieces are aligned axially relative to each other. One workpiece is secured to a rotatable shaft and the other workpiece is held stationary. The front end of the workpiece attached to the rotatable shaft is pressed against the front end of the stationary workpiece and the former workpiece is rotated under axial force. The common surfaces are pressed together and the workpieces are thereby hereby heated by the frictional heat and become plastic. When heated sufficiently to accomplish a weld, a mechanical brake is applied to stop relative rotation between the workpieces.

According to the inertial method, one workpiece is secured to a rotatable shaft on which "rotary inertia rings" are provided, which is then rotated up to a desired RPM (revolutions per minute) so as to establish a desired amount of kinetic energy in the rotating assembly. The rotating workpiece is then pressed against the other workpiece (which is held stationary), and the stored kinetic energy of the rotating assembly is converted into frictional heat at the contact area to soften the contact area and the plastic in the surrounding vicinity. When the rotational energy of the shaft is dissipated, the weld is finished. The rotary inertia rings and initial rate of rotation may be changed to vary the mount of energy input into the weld area.

Current spinwelding technology involves the use of "hard surfaced" spinning and mounting apparatus, in which there is no mechanical resiliency incorporated into the mandrels, jaws, stationary supports, collets, or other gripping apparatus used to rotate and force one plastic article against another, during the spinwelding process.

Such existing "hard-surfaced" technology cannot always be relied upon to produce a seal between a container and lid within commercially acceptable criteria for both speed of weld and burst strength, and hence there remains a need for improvements in spinwelding techniques to achieve both these criteria.

Accordingly, the present invention provides a spinwelding apparatus wherein a resilient mount is positioned between the spinwelding apparatus and at lease one, preferably both, of the thermoplastic articles to be welded. In other words the first and second body portions to be spinwelded together, such as a cup, (the first body portion), and its complemental lid, (the second body portion), are resiliently engaged by a resilient mount apparatus, which incorporates a resilient mount interposed between the "hard" surfaces of the spinweld apparatus of the prior art and the first and/or second body portions.

In a preferred embodiment, each of the articles to be welded is separated from the "hard" surfaces of the spinweld apparatus by means of a resilient mount. One of the most widely used applications of spinwelding involves the welding of a lid onto a container (or cup). In this procedure, the lid is normally located on the rotatable component of the apparatus, and in the present invention is spaced from the "hard" surface thereof by a resilient disc, whilst the container is located in the fixed component of the apparatus and spaced from the "hard" surface thereof by a resilient ring.

The resilient disc initially holds the lid away from the cup flange, and is capable of movement toward the cup flange and the resilient ring mount, so as to contact the lid and cup flange together at their complemental annular mating surfaces. Rotation of the resilient disc relative to the resilient ring spinwelds the lid to the cup flange at the annular mating surfaces when the lid and cup flange are contacted together.

Although it is generally preferable to use two resilient mounts, acceptable results may often be achieved using only one resilient mount to isolate one body portion from the "hard" prior art spin weld apparatus. Such a single resilient mount may be either a resilient ring supporting the cup flange or resilient disc supporting the lid, the preferred arrangement comprising a resilient disc placed between the rotatable spin head and the lid.

In a further embodiment, the invention also provides a method of spinwelding together two thermoplastic articles, having complemental first and second body portions formed with annular mating surfaces, by means of the apparatus herein described and claimed.

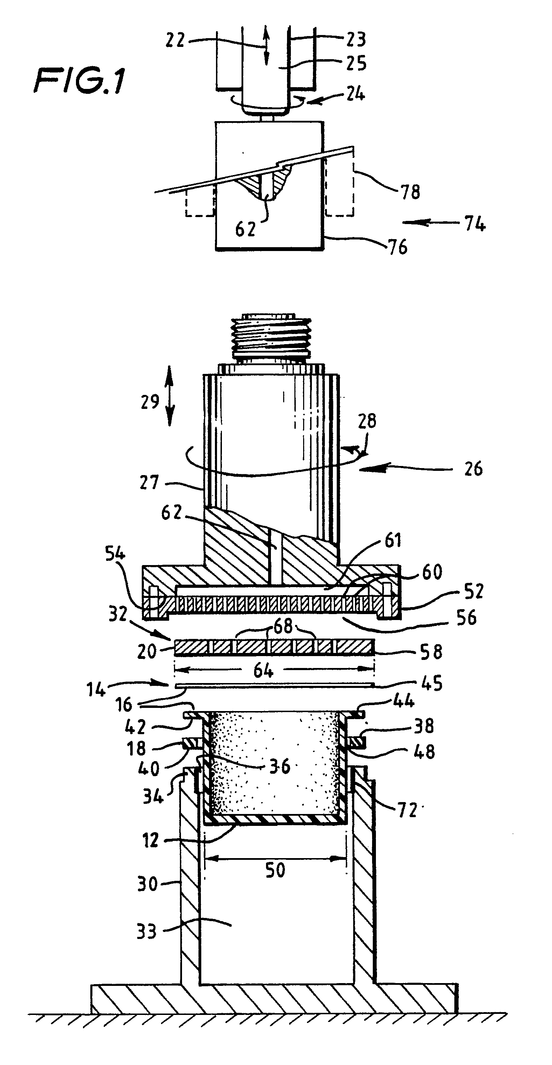

A more detailed description of the invention, is described below in conjunction with the drawing figure 1. Although this description relates to the inertial method of spinwelding, it will be apparent to those skilled in the art that the same principles are equally applicable to the pivotal method of spinwelding.

Referring to the drawings, Figure 1 is a schematic representation in a side view in partial cross section of an inertial spinweld apparatus incorporating the resilient mountings of the present invention.

Figure 1 shows a resilient spinwelding apparatus for use in the manufacture of articles having a first body portion 12 (cup) and a second body portion 14 (lid) complemental with one another. The body portions 12, 14 are formed with cooperatively mating annular mating surfaces 16. First resilient mount 18 is a ring operatively engagable to the first body portion 12, and a second resilient mount 20 is a disc

EP 0 454 241 A2

operatively engageable to the second body portion 14.

The second resilient mount 20 initially holds the second body portion away form the first body portion 12, the second resilient mount being moveable relative to the first resilient mount so as to allow the contact of the body portions at their respective cooperative annular mating surfaces. Rotation of the second resilient mount relative to the first resilient mount spinwelds the body portions together at their annular mating surfaces when they are contacted together.

Axial movement means 22 such as a slidable shaft assembly 23 well known to the art is included to move at least one of the resilient mounts toward the other so as to contact the body portions at the mating surfaces thereof. Rotatable movement means 24 such as an electric motor 25 is included to spin at least one of the resilient mounts relative to the other when the body portions are contacted together, so as to spinweld the body portions together at their annular mating surfaces.

The spinwelding apparatus that was modified to practice the teachings of the present invention was purchased from Olsen Manufacturing Company, Model SPWI-EC. The Olsen machine, during the collection of the various data shown in Table 1, applied a total load of approximately 17.5 kg to the annular mating surfaces, throughout most of the welding cycle. A 12.75 kg precompressed load was immediately applied after the initial contact between the body portions, with another 4.75 kg load resulting from subsequent spring compression.

The second support 27, commonly referred to as "spinhead 26" of the Olsen machine would descend downwardly at approximately 40 cm per second, being driven downwardly by the axial movement means 22. The total load was applied by an internal 115 kg/cm spring which was pre-compressed a distance of 0.71 cm and subsequently compressed another 0.267 cm during the downward travel to exert the approximately 17.5 kg total load.

Operation of the rotatable movement means 24 and axial movement means 22 can thereby be seen to impart to the spinhead 26 both reciprocatory movement indicated by arrow 29 as well as rotational movement indicated by arrow 28. It should be well recognised that the same mechanical effect may be accomplished by moving first support 30 in a similar manner relative to second support 27, or by other means well known to the art.

In an alternative embodiment it may be desired to incorporate only one resilient mount in the resilient spinwelding apparatus. In this alternative embodiment, by way of illustration, the first resilient mount 18 would be deleted from the apparatus such that the first support 30 would be directly engaged to the first body portion 12. Resilient mount means 32 comprising a second resilient mount 20 would be operatively engaged to the second support 27, the resilient mount means being operatively engageable, such as by an adhesive or by use of vacuum openings, to the second body portion 14. The supports 27, 30 and the resilient mount means 32 would be initially spaced to hold the body portions apart and would be thereafter moveable towards one another as well being rotatable relative to one another so as to spinweld the first and second body portions together.

It should be well recognized that many other methods of resiliently isolating the first and second body portions from the prior art hard-surfaced spinweld apparatus may be practiced according to the teachings of this invention to accomplish the same mechanical result. In the case of spinwelding thermoplastic pipe, for example, one would merely surround the end portions of the pipe with a rubber sheath at the point of contact with the collect/clamp mechanism.

More specifically, referring now to the preferred embodiment having two resilient mounts 18, 20, (and using more specific element identification labelling language), the first support 30, (specifically referred to as a cupholder), can be seen to have a cavity 33 defined downwardly therein for receiving a portion of the first body portion (specifically referred to as a cup), the first support also having a shoulder 34 defined in an annular manner at the mouth 36 of the cavity.

The first resilient mount 18, (a resilient ring), is supported by the shoulder 34 of the cupholder 30, the resilient ring having an end face 38 shaped to operatively engage the cup. The lower face 40 of the resilient ring will be carried by the annular shoulder 34. The end face 38 in turn will engage the bottom face 42 of the cup. The resilient ring has a circular opening 48 defined therethrough having a diameter at least equal to the outer diameter 50 of the cup. The apparatus would also include the second support 27, (the spinhead), and the second resilient mount 20, (a resilient disc), along with the movement means 22, 24.

Referring now to the second body portion 14 as a lid, the resilient disc 20 is operatively engageable with the lid, and also to the spin head 26. The resilient disc initially holds the lid away from the cup, the resilient disc being moveable toward the resilient ring 18 when the cup 12 is carried by the resilient ring and the lid is operatively engaged by the resilient disc, so as to contact the cup flange and lid at the annular mating surfaces. As before, rotational movement of the resilient disc relative to the resilient ring will cause the cup flange to become spinwelded to the lid at the annular surfaces when the cup flange and lid

3

are contacted together.

To initially hold the resilient disc 20 to the spin head 26 prior to spinning the spin head, vacuum grease, manufactured for example by Dow Corning, is applied to the disc and/or to vacuum plate 52 carried on the surface of the spinhead facing the resilient disc, the vacuum plate having a recess cavity 56 defined upwardly therein, the cavity being sized for acceptance of the resilient disc, the resilient disc having a periphery 58 shaped to fit upwardly within the recess cavity 56 and an outer diameter 64 at least as great as the outer radius of the annular mating surfaces 16. The recess cavity is connected via vacuum plate openings 60 defined through the vacuum plate and vacuum cavity 61 to a central vacuum opening 62 defined through the centre of the spinhead. The vacuum plate openings 60, vacuum cavity 61, and central vacuum opening 62 are well known to the art as useful in the use of atmospheric pressure to hold a member in a preferred location.

Creating a vacuum through the central vacuum opening 62 operatively engages and retains the resilient disc adjacent to the vacuum plate by atmospheric pressure acting on a portion of the disc, during the spinning of the spin head.

To hold the lid attached to the resilient disc the resilient disc further includes a group of openings 68 defined upwardly therethrough, the outer diameter of said group of openings being less than the inner radius of the annular mating surfaces, the openings 68 being in fluid communication with the central vacuum opening 62 via vacuum plate opening 60 and vacuum cavity 61, as is well known to the art.

The cup holder 30 can also be seen to include an antispin boot 72 used to prevent the cup from rotating within the cavity 33 when the spinning lid is contacted with the cup flange 44. The antispin boot has a thickness of approximately 0.5 mm and is sized on its inner diameter to slip-fit with the cup outer diameter.

The spinhead also includes a spindle 74 operatively engaged at the upper portion of the spinhead, the spindle's outer radial surface 76 forming a surface for attachment of inertia rings 78 thereto, said inertia rings 78 conveniently being formed from steel.

A version of the "hard surfaced" apparatus was initially purchased in an unsuccessful attempt to spinweld seven lids to a corresponding number of container flanges, each lid and flange having flat annular mating surfaces. Only one of the spinwelded containers/lids, (sample 55F), was of such quality so as to even warrant burst testing, (the burst test results are given for sample 53A through 48G in the first page of Table 1, included herein). Sample 55F, however, exhibited a burst pressure of only 140 kpa, which is not considered a quality burst pressure for a "robust" weld. A robust weld would have a burst pressure of approximately 345 kPa indicative of the existence of a hermetic seal at the annular mating surfaces.

The desired 345 kPa is not driven by a retort pressurization requirement. It is likely that the achievement of a 140 kPa pressure differential across the container/lid boundary would meet retort requirements. However, 345 kPa is an indicator that a truly robust and hermetic seal has been made which is just as important. At this pressure, the failure mechanism of the container/lid system is rupture (material failure) of the thin lid, and the weld is stronger than the lid material.

An additional problem was encountered during the spinwelding of these seven samples in that it took approximately 1 second to spinweld each lid to each container flange, a time apparently unacceptable in the area of mass-produced food packaging processes.

The apparatus and method here demonstrated using cup and lids formed from Huntsman Polypropylene 5384. The lids were cut from extruded sheet material, having a thickness of 0.4 mm. The Huntsman Polypropylene 5384 may be ordered from Huntsman Polypropylene Corporation, 907 North Elm Street, Suite 301, Hinsdale, Illinois 60521. This is a homopolymer with a nominal melt flow of 3.0. The lidstock was extrusion cast and the properties of the lidstock in the machine and transverse direction were measured, and found to be balanced.

The resilient ring used beneath the cup flange is a dense, silicone rubber with a nominal thickness of 3.2 mm and a Shore A durometer hardness of 60, the resilient disc is formed from the same material, and has thickness of 3.5 mm. In operation the spinhead is initially rotated from approximately 2,000 revolutions per minute to about 3,000 revolutions per minute. This, of course, would depend on the amount of energy and calories that it would be desired to input into a particular given welded area.

It should be well understood that this RPM range is specific only to the particular annular area and other inertial and geometric parameters inherent in the samples represented in Table 1. RPM's are not a stand alone variable treatable outside a broader context of annular area, inertial mass, and compression; all will affect a preferred, even workable RPM choice. The RPM range that would be selected for the spinwelding of other samples having differing geometric, material, inertial, or other properties, would probably differ from those given in Table 1.

The lid and cup are then operatively engaged between the resilient disc and resilient ring so as to position the annular mating surfaces of the cup flange and lid facing one another. The cup is carried by the resilient ring and the lid is held by vacuum to the underside of the resilient disc, the disc in turn held by vacuum grease and/or vacuum to the vacuum plate. The spinhead is brought up to the desired RPM and thereafter the resilient disc and ring are moved toward one another, so as to move the lid and cup flange toward one another. The rotatably moving annular mating surfaces of the lid and cup flange are thereafter brought into contact with one another so as to spinweld the cup flange and lid at their annular mating surfaces.

In an alternative embodiment only one resilient mount would be used, the body portions would be held apart while the spinhead was brought up to operating RPM, and thereafter the annular mating surfaces of the body portions would be brought into contact with one another to complete the spinweld between the portions.

EP 0 454 241 A2

## TABLE 1

### SPIN WELD TEST RESULTS

| SAMPLE | 53A | 52B | 51C | 49D | 50E | 55F | 48G |
|---|---|---|---|---|---|---|---|
| APPARATUS SET-UP: | | | | HARD LID HOLDER | | | |
| | | | | HARD CUP HOLDER | | | |
| Burst Pressure (kPa)[5,6] | NA | NA | NA | NA | NA | 138 | NA |
| Weld Time (secs.) | .811 | 1.154 | .872 | .840 | .850 | NA | .768 |
| Revs to weld | 12.00 | 12.88 | 17.50 | 15.50 | 14.63 | NA | 16.73 |
| Energy Input [1] | LOW | LOW | MID | MID | MID | HIGH | HIGH |
| Visual Appearance [2] | 0 | 0 | 0 | 0 | 0 | 0 | 0 |
| Flash Rating [3] (Inner/Outer) | NA | NA | NA | NA | NA | N-N | NA |
| Postweld Thickness[4] (mm) | NA | NA | NA | NA | NA | NA | NA |
| Actual Spinhead RPM | 1707 | 1428 | 2281 | 2106 | 1920 | 2854 | 2322 |
| Energy Input (calories) | 21.6 | 21.9 | 29.0 | 29.3 | 29.4 | 36.0 | 35.8 |
| WK [2] | .1351 | .1951 | .1020 | .1201 | .1451 | .0801 | .1201 |

EP 0 454 241 A2

TABLE 1 (continued)

SPIN WELD TEST RESULTS

| SAMPLE<br>APPARATUS SET-UP: | 40A | 42B | 43C | 44D<br>RESILIENT LID HOLDER<br>HARD CUP HOLDER | 45E | 46F | 47G |
|---|---|---|---|---|---|---|---|
| Burst Pressure (kPa)[5,6] | NA | 35 | 350 | 105 | 205 | 380 | 170 |
| Weld Time (secs.) | .301 | .307 | .246 | .370 | .308 | .362 | .400 |
| Revs to weld | 4.25 | 4.125 | 5.375 | 7.375 | 5.250 | 9.375 | 8.875 |
| Energy Input [1] | LOW | LOW | MID | MID | MID | HIGH | HIGH |
| Visual Appearance [2] | O | OO | +++ | OOOO | +++ | + | + |
| Flash Rating [3]<br>(Inner/Outer) | NA | N-N | N-N | SL-SL | SL-SL | SL-M | SL-M |
| Postweld Thickness[4] (mm) | NA | O | -0.1 | -0.05 | -0.075 | -0.075 | -0.075 |
| Actual Spinhead RPM | 1717 | 1423 | 2372 | 2097 | 1919 | 2860 | 2325 |
| Energy Input (calories) | 21.6 | 21.9 | 29.0 | 29.3 | 29.4 | 36.0 | 35.8 |
| WK[2] | .1351 | .1951 | .1020 | .1201 | .1451 | .0803 | .1201 |

TABLE 1 (continued)

SPIN WELD TEST RESULTS

| SAMPLE APPARATUS SET-UP: | 57A | 58B | 59C | 62D | 60E | 54F(69F) | 61G |
|---|---|---|---|---|---|---|---|
| | | | | HARD LID HOLDER | | | |
| | | | | RESILIENT CUP HOLDER | | | |
| Burst Pressure (kPa)[5,6] | 205 | 0 | 0 | 310 | 275 | 138 | 275 |
| Weld Time (secs.) | NA | NA | NA | NA | NA | NA | NA |
| Revs to weld | NA | NA | NA | NA | NA | NA | NA |
| Energy Input [1] | LOW | LOW | MID | MID | MID | HIGH | HIGH |
| Visual Appearance [2] | OO | OOO | OOOO | + | + | OO(+) | + |
| Flash Rating [3] (Inner/Outer) | S1/N | N | L-N | L-N | M | N-L(H) | M-L |
| Postweld Thickness[4] (mm) | -0.075 | -0.05 | 0 | -0.15 | -0.15 | -0.25 | -0.178 |
| Actual Spinhead RPM | 1700 | 1425 | 2270 | 2105 | 1917 | 2850 | 2325 |
| Energy Input (calories) | 21.6 | 21.9 | 29.0 | 29.3 | 29.4 | 36.0 | 35.8 |
| WK [2] | .1351 | .1951 | .1020 | .1201 | .1451 | .0803 | .1201 |

## TABLE 1 (continued)

### SPIN WELD TEST RESULTS

| SAMPLE | 64A | 65B | 63C | 67D | 66E | 70F | 68G |
|---|---|---|---|---|---|---|---|
| APPARATUS SET-UP: | | | RESILIENT LID HOLDER | | | | |
| | | | RESILIENT CUP HOLDER | | | | |
| Burst Pressure (kPa)[5,6] | 240 | 70 | 206 | 355 | 355 | 355 | 355 |
| Weld Time (secs.) | NA | NA | NA | NA | NA | NA | NA |
| Revs to weld | NA | NA | NA | NA | NA | NA | NA |
| Energy Input [1] | LOW | LOW | MID | MID | MID | HIGH | HIGH |
| Visual Appearance [2] | 0 | 000 | +++ | +++ | +++ | ++++ | +++ |
| Flash Rating [3] (Inner/Outer) | L-N | L-N | M-S1 | M-SL | M-N | H-M | H-M |
| Postweld Thickness[4] (mm) | -0.1 | -0.1 | -0.1 | -0.127 | -0.15 | -0.23 | -0.20 |
| Actual Spinhead RPM | 1700 | 1425 | 2270 | 2105 | 1917 | 2850 | 2325 |
| Energy Input (calories) | 21.6 | 21.9 | 29.0 | 29.3 | 29.4 | 36.0 | 35.8 |
| $WK^2$ | .1351 | .1951 | .1020 | .1201 | .1451 | .0803 | .1201 |

1) LOW 22 CALORIES: MID 29 CALORIES: HIGH 36 CALORIES

2) ++++ to 0000 (eight ratings) in the following order: perfect weld, nearly perfect, <10% unwetted area: 10-30% unwetted. 30-50% unwetted: 50-70% unwetted: 70-90% unwetted: No Bond.

3) N-None; SL-Slight; L-Low; M-Moderate; H-Heavy.

4) Change in thickness after weld: preweld Lid + container flange thicknesses minus post weld thickness of bonded lid container.

5) kPa: failure pressure as applied in 35 kPa increments held for one minute: L-Leak.

6) "NA" means weld did not form sufficiently for burst testing.

7) Weld times and revolutions per weld not collected due to video equipment malfunction.

Referring now to Table 1 it can be seen that the burst pressure of the joined cup/lid (food) container increases as more resiliency is built into the overall spin weld apparatus. Only one burst pressure of 138 kPa was measured when both a hard lid holder and a hard cup holder were used, with all other specimens exhibiting non-bonding and zero resistance to pressurization. When a resilient lid holder and a hard cup holder were used, the burst pressure of some measured samples increased. Using a hard lid holder and a resilient cup holder yielded similar results, but slightly lower, on the average, burst pressures. When both the resilient lid holder and resilient cup holder were used, (samples 64A, 65B, 63C, 67D, 66E, 70F, 68G), it can be seen that the burst pressures of most of the samples consistently could reach the desired operating pressures of 355 kPa. Within the preferred range of RPM's, (2000 to 3000 RPM), all specimens in this group met the 355 kPa burst pressure target.

Whereas the weld time in seconds using the entirely hard surfaced system would average from between .8 to 1.1 seconds, the inclusion of just one resilient lid holder significantly reduced the weld time to between .2 and .4 seconds. (An equipment malfunction in the video equipment prevented collection of data for the remaining samples).

It can also be seen that the revolutions to weld, i.e., how many times one body portion rotated relative to another during the formation of the weld zone, decreased substantially between the entirely "hard" system to the system that incorporated the resilient lid holder. Again, the revolutions to weld time data was not able to be collected due to a malfunction of the video equipment.

From the above results, it is clear that inclusion of the resilient mounts significantly reduced the spinweld time of the lid to the container flange. The resultant mechanical joint between the lid and the container flange has also exhibited a dramatic increase in burst pressure.

The visual appearance of the weld also substantially improved as more resiliency was built into the system.

Other notes in Table 1 set forth the location and amount of flash generated between the inner and outer diameters of the weld junction, along with the post weld thickness in mm, the actual spin head RPM, as well as the energy input in calories, along with the inertial input into the system.

The resilient spin weld apparatus should show benefit in spin welding of all semi-crystalline materials, for example, polypropylene, a semi-crystalline olefinic polymer as disclosed in this work. Some important materials from a food and beverage packaging context for hot filled or retorted packages are polypropylene and its copolymers, polyethylene (low, medium, high density, linear), polybutylene and its copolymers, 4-methylpentene, and its copolymer (TPX Polymers available from Mitsui).

The method and apparatus of the present invention should similarly show benefit in the spinwelding of semi-crystaline polar polymers such as PET, polyamides, polyketones, and polyvinyl chloride, for example, as well as semi-crystaline barrier polymers such as ethylene vinyl alcohols, PVDC and its copolymers, as well as acrylonitrile copolymers (Barex). The material used for the body portions may also be blends of these polymers; polymers in a melt index or melt flow range of 0.1 to 40, (which would cover container/lids made by thermoforming, injection molding, blow molding; and/or extrusion of sheet as a precursor to thermoforming).

While amorphous polymers have not been spinwelded using this apparatus it is suspected that they may also benefit from their use in the resilient spin weld apparatus. Such amorphous materials would be, for example, amorphous nylons, polystyrene, polycarbonate, acrylics, as well as PETG (non-crystallizing PET).

The process is envisioned to also be applicable to the use of functionalized polymers, such as materials ordinarily used to bond layers of dissimilar materials in multilayer food packages such as Admers (Mitsui), Plexars (Quantum) and Bynels (DuPont).

The envisioned commercial range of interest for this invention would span containers with outside diameters of about 50 mm to about 150 mm. Examples include baby food containers having a relatively small size up to coffee can size packages. Containers ordinarily employing narrow openings such as juice, salad dressings, ketchup and the like could also be fabricated using the resilient spin weld apparatus.

From a welding viewpoint, a minimum thickness of 0.13 mm for either component is a likely minimum. Thinner components, if stiffer, with less likelihood of wrinkling upon contact and rotation, might reduce this minimum. Much lower than 0.13 mm thickness, heat sealing is an alternative technology which would come into play. One advantage of the present invention is the ability to quickly weld thick, poor thermal conductivity plastic sections. It should be noted that a thin, 0.25 mm welded joint will be flimsy in the hands of the consumer. In thermoforming of lids/containers, the starting sheet thickness will likely be a minimum of about 1.3 mm. It would be impractical and unnecessary to coin flanges or lid areas much less than about 1/2 of the starting sheet thickness. Functionally speaking therefore, a semi-rigid lid will probably be 0.25 mm, or greater perhaps to 0.89 mm. These minimums are governed by stresses found in retorting, shipment, storage, stacking, etc. Therefore a real lower boundary estimate for the final weld thickness is likely approximately 0.5 mm.

As far as the upper boundary thickness, it is likely that no more than a thermoformable sheet thickness (starting) of 1.3 mm for the container and lid (for a combined thickness of 2.5 mm) will be used. However, at this thickness, the effectiveness of the resilient spinweld apparatus (in some respects) may be reduced due to the increased stiffness of the components.

The major governing factor of the width of the annular mating surfaces is the weld seal width required for hermetically sealing of the comestible in a regulatory sense: about 3 mm. Thus, flange widths from about 3 mm upwards will provide an acceptable minimum to meet this important Federal Drug Administration requirement. From a welding viewpoint, it is hard to imagine an actual weld width that could ever be required that exceeded 12.5 mm. It is more likely that 6.3 mm maximum weld width will suffice.

Many other variations and modifications may be made in the apparatus and techniques hereinbefore described, both by those having experience in this technology, without departing from the concept of the present invention. Accordingly it should be clearly understood that the apparatus and methods depicted in the accompanying drawings and referred to in the foregoing description are illustrative only and are not intended as limitations on the scope of the invention.

## Claims

1. Resilient spinwelding apparatus for use in the manufacture of articles having a first body portion and a second body portion complemental with one another, said body portions formed with annular mating surfaces, said spinwelding apparatus comprising;
   - a first resilient mount operatively engagable to said first body portion,
   - a second resilient mount operatively engagable to said second body portion, said second resilient mount initially spacing said second body portion away from said first body portion, said second resilient mount movable relative to said first resilient mount to contact said body portions at said annular mating surfaces, rotation of said second resilient mount relative to said first resilient mount being operable to spinweld said body portions at said annular mating surfaces when said body portions are contacted together,
   - means for moving at least one of said resilient mounts to contact said body portions at the mating surfaces thereof, and
   - means for rotatably moving at least one of said resilient mounts when said body portions are contacted together so as to spin weld the latter at said mating surfaces.

2. Resilient spinwelding apparatus for use in the manufacture of plastic articles having complemental first and second body portions formed with annular mating surfaces, said spinwelding apparatus comprising:
   - a pair of supports, one of said supports operatively engaged to said first body portion,
   - resilient mount means operatively engaged to the other of said supports, said resilient mount means operatively engageable to said second body portion, said supports and said resilient mount means initially spaced to hold said body portions apart and thereafter movable to contact said body portions at the annular mating surfaces thereof,
   - means for moving said supports and said resilient mount means relative to one another to contact said body portions at the mating surfaces thereof, and
   - means for rotatably moving said supports relative to one another when said annular mating surfaces are contacted together to spin weld the latter at said annular mating surfaces.

3. Resilient spinwelding apparatus for use in the manufacture of articles having a first body portion and a second body portion complemental with one another, said body portions formed with annular mating surfaces, said spinwelding apparatus comprising;
   - a first support having a cavity for receiving a portion of said first body portion and having a shoulder at the mouth of said cavity,
   - a first resilient mount supported by the shoulder of said first support, said first resilient mount having an end face shaped to operatively engage said first body portion,
   - a second support,
   - a second resilient mount operatively engaged to said second support and operatively engagable with said second body portion so as to initially space said second body portion away from said first body portion, said second resilient mount movable relative to said first resilient mount to contact said body portions at said annular mating surfaces, rotation of said second resilient amount relative to said first resilient mount being operable to spinweld said body portions at said annular mating surfaces when said body portions are contacted together,
   - means for moving at least one of said resilient mounts relative to said other resilient mount to contact said body portions at the mating surfaces thereof, and
   - means for rotatably moving at least one of said resilient mounts when said body portions are contacted together to spinweld the latter at said mating surfaces.

4. Resilient spinwelding apparatus for use in joining a cup and a complemental lid together, said cup having a flange defined about the upper periphery thereof, said cup flange and lid formed with annular mating surfaces, said spinwelding apparatus comprising:
   - a cup holder having a cavity for receiving a portion of said cup and having an annular shoulder at the mouth of said cavity,
   - a resilient ring supported by the annular shoulder of said cup holder, said resilient ring having an end face shaped to support said cup flange,
   - a spinhead,
   - a resilient disc operatively engaged to said spinhead and operatively engagable with said lid, said resilient disc initially spacing the lid from the cup, said resilient disc movable toward said resilient ring to contact said cup flange and lid at said annular mating surfaces, rotational movement of said resilient disc relative to said resilient ring being operable to spinweld said cup flange and said lid at said annular mating surfaces when said cup flange and said lid are contacted together,
   - means for moving said resilient disc relative to said resilient ring to contact said cup flange and said lid at the mating surfaces thereof, and
   - means for rotationally moving said resilient disc relative to said resilient ring when said cup flange and said lid are contacted together to spinweld the lid to the cup flange at said mating surfaces.

5. The apparatus of claim 4 wherein said resilient ring has a circular opening defined therethrough having a diameter at least equal to the outer diameter of said cup, said resilient ring having a lower face cooperatively engaged with and carried by said annular should of said cupholder.

6. The apparatus of claim 4 wherein said spinhead further includes;
   - a central vacuum defined therethrough,
   - a vacuum plate carried on the surface of said spinhead facing said resilient disc, said vacuum plate having a recess cavity sized for acceptance of said resilient disc therein, said recess cavity connected via vacuum plate openings defined through said vacuum plate to said central vacuum opening so that said resilient disc is operatively engaged to said vacuum plate by atmospheric pressure acting on a portion of said disc when air is removed from said central vacuum opening.

7. The apparatus of claim 4 wherein said resilient disc has an outer diameter at least as great as the outer radius of said annular mating surfaces.

8. The apparatus of claim 4 wherein said resilient disc further includes a group of openings defined therethrough, the outer diameter of said group of openings being less than the inner radius of said annular mating surfaces, said openings being in fluid communication with a central vacuum opening defined through said spinhead so as to retain said lid adjacent said resilient disc by atmospheric pressure acting on a portion of said lid.

9. The apparatus of claim 4 wherein said spinhead further includes a spindle operatively engaged at the upper portion thereof, the outer radial surface of said spindle forming a surface for attachment of inertial rings thereto.

10. Method of spinwelding together two thermoplastic articles, having complemental first and second body portions formed with annular mating surfaces, by means of an apparatus as claimed in any one of the preceding claims.

**FIG.1**